# EUROPEAN PATENT SPECIFICATION

(11) **EP 1 722 346 B1**
(45) Date of publication and mention of the grant of the patent: **26.12.2012**
(21) Application number: 06250973.2
(22) Date of filing: 23.02.2006
(51) Int. Cl.: G09B 23/28

(54) **An endoscopy simulation system**
Simulationssystem für die Endoskopie
Système de simulation d'endoscopie

(30) Priority: 13.05.2005 GB 0509847
(43) Date of publication of application: 15.11.2006
(73) Proprietor: KEYMED (MEDICAL & INDUSTRIAL EQUIPMENT) LIMITED, Southend-on-Sea Essex SS2 5QH (GB)
(72) Inventor: Wallaker, Daniel Mark, Essex SS3 OAS (GB); White, William John, Essex SS5 DD (GB)
(74) Representative: Draper, Martyn John

(56) References cited:
- EP-A- 0 203 897
- GB-A- 2 252 656
- US-A1- 2002 188 174
- US-A1- 2004 076 940

## Description

The present invention relates to an endoscopy simulation system.

An endoscopy simulation system comprises a dummy endoscope that is inserted into a simulation device. This device has sensors to detect longitudinal and rotational movement of the dummy instrument, and to apply force feedback to the instrument based on the detected position in relation to a software model of a colon. The software model also provides the operator with a simulated display of the inside of the colon as it would be seen through a real endoscope based on the detected position. An endoscope handle has a pair of control knobs which, in a real endoscope, can move the tip of the endoscope in left/right and up/down directions respectively in a process known as angulation. In a simulator, the position of these knobs is detected and, as this affects the position of the end of the endoscope, this is also taken into consideration by the simulation.

An early disclosure of a simulator as described above is provided by GB2252656.

US 2004/0076940 discloses an endoscopy training device with independant linear and rotational force field back.

A recent development in the field of real endoscopy has been the variable stiffness endoscope. This is described, for example, in US 5, 810, 715, US 5,885,208, US 5,976,074, US 6,203,494 and US 6,589,163.

The variable stiffness mechanism takes the form of a rotatable collar on the endoscope handle which is connected to a wire inside a coil extending along the insertion tube of the endoscope. Rotation of the collar alters the tension of the wire thereby changing the stiffness characteristics of the insertion tube. The ability to vary the stiffness characteristics in this way is of great benefit to a user, particularly when navigating an organ with a complex shape such as a colon.

To date, no endoscopy simulation system is able to simulate this variable stiffness feature.

According to the present invention there is provided an endoscopy simulation system comprising a dummy endoscope having an insertion portion; a force feedback unit into which the insertion tube is insertible in use, the force feedback unit being provided with sensors to sense the linear and rotational position of the endoscope, and a means to provide independent linear and rotational force feedback to the endoscope while its position is sensed by the sensors; characterised by the dummy endoscope having a manually adjustable collar not connected to a mechanism for adjusting the stiffness of the insertion portion and a position sensor for sensing the position of the collar, and the system further comprising a controller which stores a software model of a colon and receives signals from the sensors and position sensors adapted to convert the position of the collar to a value representing the simulated stiffness of the insertion portion for use in the simulation and which is configured for generating the required levels of force feedback to the means to provide independent linear and rotational force feedback based on the software model and readings from the sensors and position sensor.

Such a system provides the capability to simulate the variable stiffness of the endoscope insertion tube. This allows trainees to practice complex endoscopy techniques involving changing the stiffness, and to familiarise themselves with the possibilities afforded by variable stiffness before attempting such procedures on a real patient. Also, the simulator can be set up to present an operator with situations which typically require the operator to make full use of the variable stiffness simulation, thereby specifically targeting training at this aspect of the device.

Further, by using a collar which is connected, in a real endoscope, to the mechanism for adjusting the stiffness, the endoscope is designed to retain, as much as possible, the look and feel of the real instrument.

The position sensor may be a rotary sensor directly attached to the collar. However, preferably, a mechanism for transmitting the movement of an internal mechanism of the collar is provided between the collar and the position sensor. This allows the sensor to be spaced away from the collar, thus ensuring that no additional bulky components are required in the vicinity of the collar which would spoil the look and feel of the instrument. Rotation of the collar results in a linear movement of the internal mechanism which causes linear movement of a rod. The rod preferably extends proximally from the collar. In this position, the rod and the sensor can most readily be accommodated within the handle without disturbing other components or adding to the bulk of the handle.

Preferably, the position sensor and any motion conversion device are housed within a handle of the endoscope. Again, this is done in order to ensure that the instrument maintains a realistic look and feel.

It is possible for the collar to be left connected to the mechanism for adjusting the stiffness of the insertion tube of the endoscope so that during the simulation the user is then able to alter the actual stiffness of the insertion tube of the endoscope. However, there is no great need to adjust the actual stiffness of the endoscope during simulation. Therefore, preferably, the collar does not alter the actual stiffness characteristics of the insertion portion of the dummy endoscope. This improves the accuracy of the sensing mechanism by eliminating movement of the sensing mechanism caused by the movement of the insertion portion of the dummy endoscope.

The effects of the variable stiffness are simply taken into account in the simulation rather than in the actual insertion tube. This preferably manifests itself in terms of the software calculations governing the interaction between the dummy endoscope and the simulated organ, the appearance of the simulated organ and dummy endoscope on a display, and on force feedback applied to the insertion tube.

When a display is provided, the system preferably also comprises means for displaying a value corresponding to the simulated stiffness for the insertion tube. This is a useful training tool as a user is readily able to see the stiffness of the insertion tube.

Although in a real endoscope the stiffness is continuously variable within a certain range, the sensor is preferably configured to sense a number of discrete positions (for example 4). It has been found that four discrete states represent a reasonable approximation of the feel of a real insertion tube with variable stiffness. This also simplifies the dummy endoscope and ensures that the stiffness value can be represented with only two bits of data.

An example of a system in accordance with the present invention will now be described with reference to the accompanying drawings, in which:
Fig. 1 is a schematic view of the overall medical simulator;
Fig. 2 is a perspective view of a part of the endoscope handle;
Fig. 3 is an exploded perspective view of the sensing mechanism; and
Fig. 4 is a schematic diagram showing the operation of the sensing mechanism.

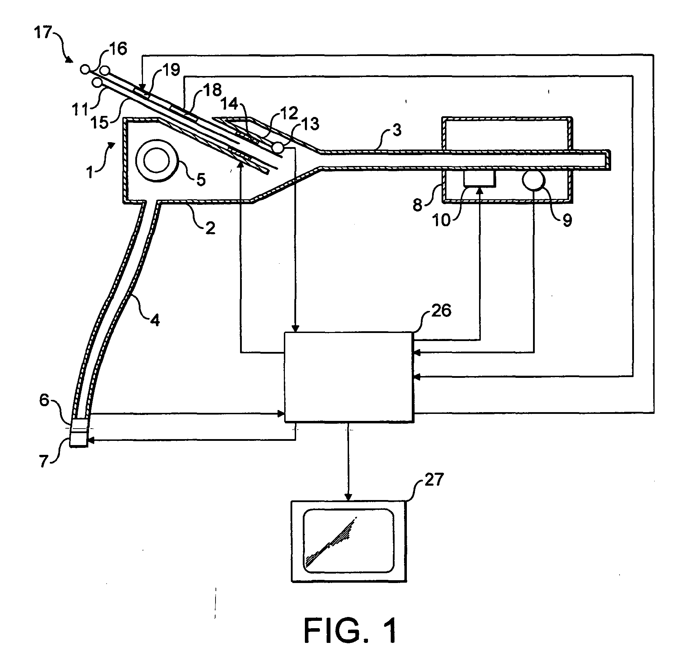

Fig. 1 is a schematic view of the overall simulator. The simulator comprises a dummy endoscope 1 which is based on a real endoscope modified to the minimum extent necessary to make it suitable for use in the simulator. The instrument has a handle 2, insertion tube 3 and an umbilical 4. In the real instrument the insertion tube 3 is inserted into the patient, while the umbilical is provided to transmit data, light, air and water to and from the insertion tube.

Movement, known as angulation, of the tip of the endoscope is effected by a pair of knobs 5. In a real instrument, wires extend from these knobs to the distal end of the insertion tube so that the movement of the knobs is transmitted to the tip of the endoscope. One knob provides up/down movement and the other provides left/right movement. In the dummy endoscope 1 the cables are rerouted down the umbilical and their movement is detected by sensors 6 and force feedback to the knobs 5 is provided by force feedback motors 7. This is described in WO 03/058583.

The insertion tube 3 is inserted into a force feedback unit 8 provided with sensors 9 to sense the linear and rotational position of the endoscope while force feedback is provided by force feedback unit 10 which provides independent linear and rotational force feedback. This is described in WO 03/050783.

A secondary instrument 11 is inserted into a channel 12 in the endoscope handle and passes virtually to the end of insertion tube 3. The degree of insertion is sensed by a sensor 13 and force feedback is provided for example by a pneumatic sleeve 14. The secondary instrument 11 comprises an outer sleeve 15 and handle 17 which is relatively movable with respect to the sleeve 15. In a real instrument, the handle 17 would be connected to a cable and there would be a tool at the distal end of the cable. Upon insertion to the required degree into the insertion tube, the tool would then project from the distal end of the insertion tube 3. Movement of the handle 17 is sensed by a linear potentiometer 18 and force feedback is provided by a frictional brake 19.

All of the signals from the various sensors are transmitted to a controller 26 which controls the simulation. The controller stores a software model of the colon and, together with the information from the sensors, this is used to generate the required levels of force feedback to the various force feedback devices. Also, the controller 26 determines from the calculated position of the insertion tube 3 and control knobs 5 the image which would be seen by the endoscope and displays this on screen 27. If the sensor 13 detects that the secondary instrument 11 has been inserted to a sufficient degree that it would emerge from the distal end of the insertion tube 3, the tool at the end of the secondary instrument would also be displayed on screen 27. The actual condition of the tool will be determined by the relative position of the handle 17 within the sleeve 15 as measured by linear potentiometer 18, and this is incorporated into the displayed image.

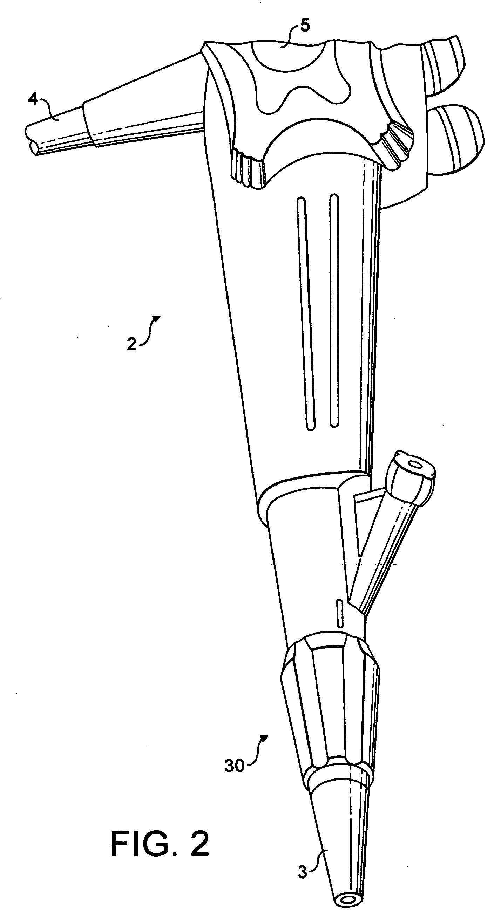

The variable stiffness simulation will now be described with reference to Figs. 2 to 4.

Fig. 2 is a perspective view of part of the handle 2. This has a collar 30 to provide the variable stiffness control as disclosed in US 5,810,715, US 5,885,208, US 5,976,074 and US 6,203,494. Effectively, in a real endoscope, the collar 30 is rotated thereby adjusting the tension in a coil of wire travelling along the insertion tube 3 to vary the stiffness of the insertion tube.

In the dummy endoscope, the coil of wire may still be present, but it is preferably not now connected to the collar 30.

A slider rod 33 is connected to a component 32 within the collar which converts rotary movement of the collar to linear movement. The rod 33 extends proximally within the instrument, namely towards the handle 2, rather than towards the insertion tube 3.

At the opposite end of the slider rod 33 is a slider bar 34. The slider bar 34 has a circular orifice 35 and elongate orifice 36. The slider bar 34 is positioned adjacent to a PCB 37. The PCB 37 has a first 38 and second 39 slotted opto-sensor which define a channel in which the slider bar 34 runs.

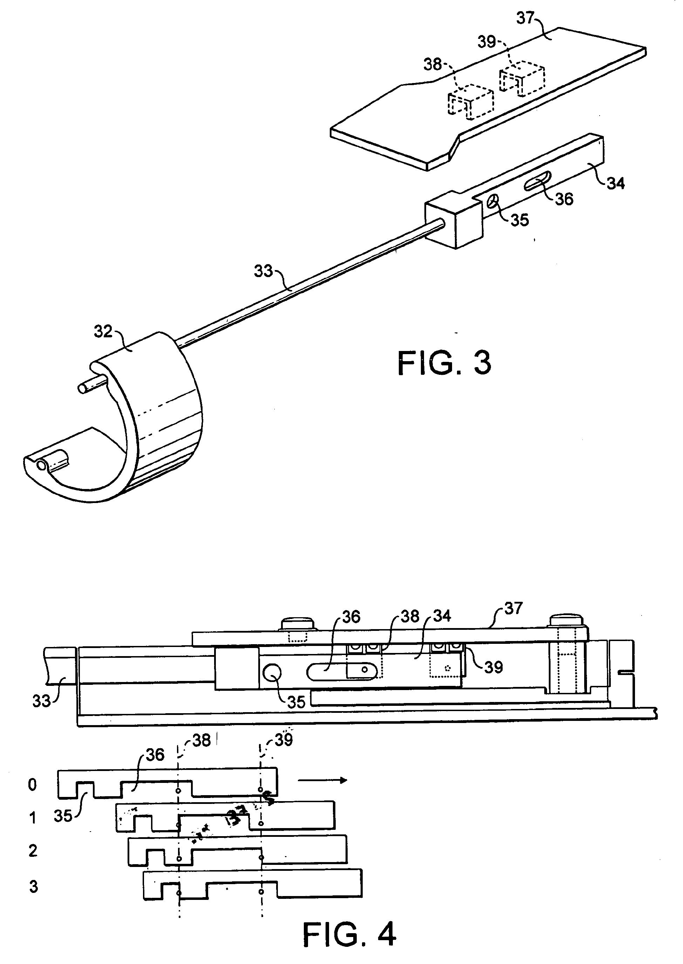

Fig. 4 illustrates the manner in which the orifices 35, 36 cooperate with the opto-sensors 38, 39 in order to provide four different state signals corresponding to four different stiffness settings. The collar 30 in a real endoscope is numbered from 0 to 3 to provide an operator with an indication of the current stiffness setting. This arrangement is mirrored by the four settings of the endoscope. The opto-sensors adopt the following logical states depending on the positions of the orifices relative to the opto-sensors.

| **Stiffness Settings** | **Opto-sensor State** |
|---|---|
| 0 | 10 |
| 1 | 00 |
| 2 | 01 |
| 3 | 11 |

The state of the opto-sensors 38, 39 is transmitted to controller 26. This determines the stiffness of the insertion tube based on the transmitted signal and incorporates this into the overall simulation. The stiffness is a factor in calculating the interaction between the dummy endoscope and the simulated organ. This will affect the nature of the image displayed on screen 27, and also the force feedback transmitted via the force feedback motors 7 and the force feedback unit 10.

The screen 27 may also be arranged to display a number corresponding to the stiffness setting referred to above.

## Claims

1. An endoscopy simulation system comprising a dummy endoscope (1) having an insertion portion (3); a force feedback unit (8) into which the insertion tube is insertible in use, the force feedback unit being provided with sensors (9) to sense the linear and rotational position of the endoscope, and a means (10) to provide independent linear and rotational force feedback to the endoscope while its position is sensed by the sensors; **characterised by** the dummy endoscope having a manually adjustable collar (30) not connected to a mechanism for adjusting the stiffness of the insertion portion and a position sensor (38, 39) for sensing the position of the collar, and the system further comprising a controller (26) which stores a software model of a colon and receives signals from the sensors (9) and position sensors (38, 39) adapted to convert the position of the collar to a value representing the simulated stiffness of the insertion portion for use in the simulation, and which is configured for generating the required levels of force feedback to the means (10) to provide independent linear and rotational force feedback based on the software model and readings from the sensors (9) and position sensor (38, 39).

2. A system according to claim 1, further comprising a rod (33) which extends proximally from the collar (30) and which is arranged to move linearly upon a rotation of the collar wherein the position sensor (38, 39) is arranged to sense the movement of the rod.

3. A system according to claim 2, wherein the position sensor (38, 39) and rod (33) are housed within a handle of the endoscope.

4. A system according to any one of the preceding claims, further comprising a display (27) and a means for displaying on the display a value corresponding to the simulated stiffness for the insertion tube.

5. A system according to anyone of the preceding claims, wherein the sensor (38, 39) is configured to sense a number of discrete positions.

## Patentansprüche

1. Endoskopie-Simulationssystem, das einen Endoskop-Dummy (1) aufweist, mit einem Einführabschnitt (3); einer Kraft-Rückkopplungseinheit (8), in welche der Einführschlauch bei der Verwendung einführbar ist, wobei die Kraft-Rückkopplungseinheit Sensoren (9) zum Abtasten der linearen Lage und der Drehlage des Endoskops aufweist, und ein Mittel (10) zum Bereitstellen von unabhängiger linearer und Dreh-Kraft-Rückkopplung an das Endoskop, während seine Position von den Sensoren abgetastet wird; **dadurch gekennzeichnet, dass** der Endoskop-Dummy eine manuell einstellbare Manschette (30), die nicht mit einem Mechanismus zum Einstellen der Steifigkeit des Einführabschnitts verbunden ist, und einen Positionssensor (38, 39) zum Abtasten der Position der Manschette aufweist, und wobei das System des Weiteren eine Steuereinheit (26) aufweist, die ein Software-Muster eines Kolons speichert und Signale von den Sensoren (9) und Positionssensoren (38, 39) empfängt, die so ausgelegt sind, dass sie die Position der Manschette in einen Wert umwandeln, der die simulierte Steifigkeit des Einführabschnitts zur Verwendung in der Simulation darstellt, und welche Manschette dazu ausgestaltet ist, die benötigten Level von Kraft-Rückkopplung an das Mittel (10) zu erzeugen, zur Bereitstellung von unabhängiger linearer und Dreh-Kraft-Rückkopplung basierend auf dem Software-Muster und Auslesungen von den Sensoren (9) und Positionssensoren (38, 39).

2. System nach Anspruch 1, das des Weiteren eine Stange (33) aufweist, die sich proximal von der Manschette (30) erstreckt und die so angeordnet ist, dass sie sich bei Drehung der Manschette linear bewegt, wobei der Positionssensor (38, 39) so angeordnet ist, dass er die Bewegung des Stabs abtastet.

3. System nach Anspruch 2, wobei der Positionssensor (38, 39) und die Stange (33) innerhalb eines Griffs des Endoskops aufgenommen sind.

4. System nach einem der vorhergehenden Ansprüche, das des Weiteren eine Anzeige (27) und ein Mittel zum Anzeigen eines Werts auf der Anzeige aufweist, der der simulierten Steifigkeit für den Einführschlauch entspricht.

5. System nach einem der vorhergehenden Ansprüche, wobei der Sensor (38, 39) so ausgestaltet ist, dass er eine Reihe von diskreten Positionen abtastet.

## Revendications

1. Système de simulation d'endoscopie comprenant un endoscope factice (1) comportant une partie d'insertion (3) ; un bloc de retour de force (8) dans lequel le tube d'insertion est insérable à l'utilisation, le bloc de retour de force étant pourvu de capteurs (9) servant à détecter la position linéaire et en rotation de l'endoscope, et d'un moyen (10) destiné à fournir, à l'endoscope, un retour de force linéaire et en rotation indépendant tandis que sa position est détectée par les capteurs ; **caractérisé en ce que** l'endoscope factice comporte une collerette (30) réglable manuellement qui n'est pas reliée à un mécanisme pour régler la rigidité de la partie d'insertion et des capteurs de position (38, 39) pour détecter la position de la collerette, et le système comprenant, en outre, un dispositif de commande (26) qui stocke un modèle logiciel d'un côlon et reçoit des signaux des capteurs (9) et des capteurs de position (38, 39) aptes à convertir la position de la collerette en une valeur représentant la rigidité simulée de la partie d'insertion pour utilisation dans la simulation, et qui est conçu pour produire les degrés requis de retour de force jusqu'au moyen (10) afin de fournir un retour de force linéaire et en rotation indépendant basé sur le modèle logiciel et les mesures des capteurs (9) et des capteurs de position (38, 39).

2. Système selon la revendication 1, comprenant, en outre, une tige (33) qui s'étend dans la direction proximale par rapport à la collerette (30) et qui est agencée pour se déplacer linéairement lors d'une rotation de la collerette, les capteurs de position (38, 39) étant conçus pour détecter le déplacement de la tige.

3. Système selon la revendication 2, dans lequel les capteurs de position (38, 39) et la tige (33) sont logés au sein d'un manche de l'endoscope.

4. Système selon l'une quelconque des revendications précédentes, comprenant, en outre, un affichage (27) et un moyen pour afficher, sur l'affichage, une valeur correspondant à la rigidité simulée pour le tube d'insertion.

5. Système selon l'une quelconque des revendications précédentes, dans lequel les capteurs (38, 39) sont conçus pour détecter un nombre de positions distinctes.
